# EUROPÄISCHE PATENTSCHRIFT

(11) **EP 1 135 213 B1**
(45) Veröffentlichungstag und Bekanntmachung des Hinweises auf die Patenterteilung: **20.06.2007**
(21) Anmeldenummer: 99963382.9
(22) Anmeldetag: 03.12.1999
(51) Int. Cl.: B05B 7/00, B65B 55/10

(54) **VORRICHTUNG ZUM ERZEUGEN EINES AEROSOLS**
DEVICE FOR GENERATING AN AEROSOL
DISPOSITIF POUR PRODUIRE UN AEROSOL

(30) Priorität: 05.12.1998 DE 29821687 U
(43) Veröffentlichungstag der Anmeldung: 26.09.2001
(73) Patentinhaber: Finnah Engineering und Packaging GmbH, 48683 Ahaus (DE)
(72) Erfinder: WEGNER, Herbert, D-48683 Ahaus (DE); KOWALIK, Gottfried, D-48712 Gescher (DE)
(74) Vertreter: Busse & Busse Patentanwälte
(86) Internationale Anmeldenummer: PCT/EP1999/009469
(87) Internationale Veröffentlichungsnummer: WO 2000/033967

(56) Entgegenhaltungen:
- DE-A- 2 308 012
- GB-A- 2 318 294

## Beschreibung

Die Erfindung bezieht sich auf eine Vorrichtung zum Erzeugen eines Aerosols gemäß dem Oberbegriff des Anspruchs 1.

Bei einer bekannten Vorrichtung dieser Art (DE-A-23 08 012) ist ein sich horizontal erstreckender Zerstäuberbehälter mit einer einseitigen, zentralen Zerstäuberdüse vorgesehen, die von einem sich in Achsrichtung der Zerstäuberdüse kontinuierlich verengenden Ringraum umgeben ist, der in seinem stromabwärtigen Bereich Austrittsöffnungen für die Transportluft aufweist.

Die Erfindung befaßt sich mit dem Problem, eine Vorrichtung zu schaffen, die bei einfacher Ausführung und hoher Leistung ein besonders homogenes Aerosol erzeugt. Die Erfindung löst diese Aufgabe durch eine Vorrichtung gemäß Anspruch 1. Hinsichtlich wesentlicher weiterer Ausgestaltungen wird auf die Ansprüche 2 bis 20 verwiesen.

Die Vorrichtung nach der Erfindung, die insbesondere für die Erzeugung von sterilisierenden bzw. desinfizierenden Aerosolen bestimmt ist, wie sie beispielsweise bei der Sterilisierung von Verpackungsmitteln wie Flaschen eingesetzt werden, erzeugt bei hoher Leistung ein besonders homogenes, tröpfchenfreies Aerosol, das bei Bestehen aus beispielsweise Sterilluft und Peroxid eine hohe Sterilisations- bzw. Desinfektionskraft aufweist.

Weitere Einzelheiten und Wirkungen ergeben sich aus der nachfolgenden Beschreibung und der Zeichnung, in der schematisch Ausführungsbeispiele eines Aerosolerzeugers nach der Erfindung veranschaulicht sind. In der Zeichnung zeigen:
- Fig. 1: eine schematische Darstellung einer ersten Ausführung eines Aerosolerzeugers nach der Erfindung, und
- Fig. 2: eine Darstellung ähntich Fig. 1 einer zweiten Ausführungsform eines Aerosolerzeugers nach der Erfindung.

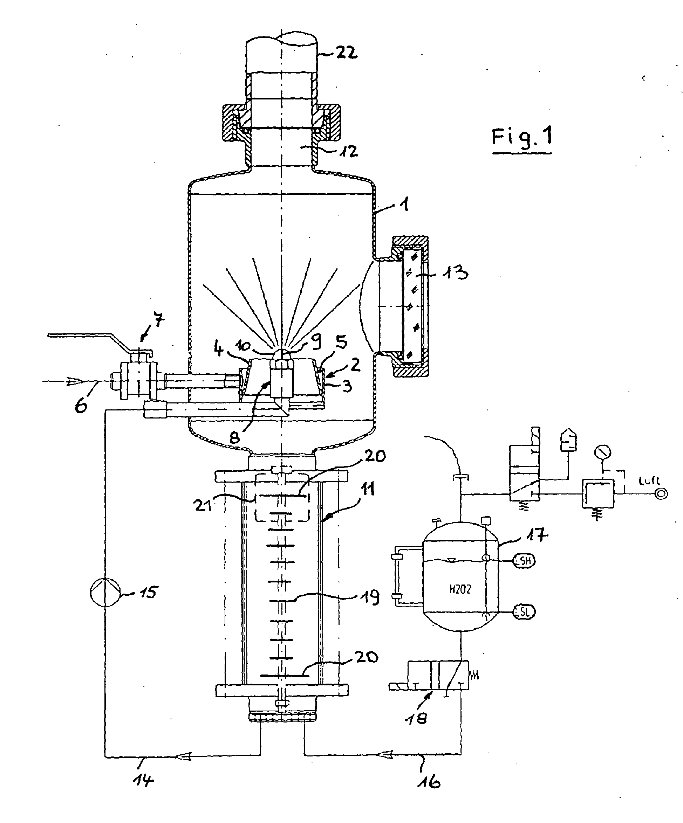

Die in Fig. 1 dargestellte Vorrichtung umfaßt einen Zerstäuberbehälter 1, der in seinem unteren Bereich eine Ringdüse 2 als Mittel für die Bildung eines ringförmigen, gebündelten Gasstroms aufweist. Die Ringdüse 2 hat einen zylindrischen Außenringteil 3 und einen in diesem angeordneten Innenringteil 4, der kreiskegelabschnittsförmig ausgebildet ist und mit dem Außenringteil 3 einen sich nach oben hin erweiternden Düsenkanal 5 begrenzt, der an seiner Unterseite abgeschlossen ist. In den Düsenkanal 5 mündet eine Zuleitung 6 für den gasförmigen Bestandteil des Aerosols ein, der vorzugsweise aus erwärmter Sterilluft besteht. Die Temperatur dieser Sterilluft kann beispielsweise 60 bis 80° betragen. Ein bei 7 angedeutetes Absperrventil, vorzugsweise ein Membranventil, dient der Freigabe bzw. dem Absperren der Verbindung zu einer nicht dargestellten Sterilluftquelle. Es kann von Hand oder vorzugsweise mittels Stellantrieb betätigbar sein.

inmitten der Ringdüse 2 ist eine Zerstäuberdüse 8 für den flüssigen Bestandteil des Aerosols, vorzugsweise Peroxid (H₂O₂), angeordnet. Die Zerstäuberdüse 8 kann als Schlitzdüse ausgebildet sein und einen Düsenschlitz 9 aufweisen, der einen kugeligen Düsenkörper 10 radial durchsetzt und etwa in Höhe des oberen Randes des Innenringteils 4 der Ringdüse 2 gelegen ist. Stattdessen kann die Zerstäuberdüse aber auch eine normale Ausführung mit im Querschnitt kreisförmigen Düsenkanal haben.

Der Zerstäuberbehälter 1 hat eine zylindrische Grundform und geht in Fig. 1 bodenseitig in das obere Ende eines Meßbehälters 11 für den flüssigen Bestandteil des Aerosols über, so daß sich an der Innenseite des Zerstäuberbehälters 1 durch Kondensierung abschlagendes Peroxid unmittelbar in den Meßbehälter 11 zurücklaufen kann. Deckelseitig ist der Behälter 1 mit einer Austrittsöffnung 12 für das erzeugte Aerosol versehen, an die eine zu einem Einsatzort führende Abförderleitung 22 anschließbar ist, und in der Seitenwand des Zerstäuberbehälters 1 ist eine von einem Schauglas 13 verschlossene Inspektionsöffnung vorgesehen.

Aus dem unteren Ende des Meßbehälters 11 mündet eine Verbindungsleitung 14 aus, in die eine Pumpe 15, vorzugsweise eine Membranpumpe, eingeschaltet ist. Diese Verbindungsleitung 14 ist durch die Behälterseitenwand in den Zerstäuberbehälter 1 hineingeführt und trägt an ihrem Ende die Zerstäuberdüse 8.

In den unteren Bereich des Meßbehälters 11 mündet ferner eine Verbindungsleitung 16 ein, die den Meßbehälter 11 an einen (schematisch in Verkleinerung veranschaulichten) Vorratsbehälter 17 für den flüssigen Bestandteil des Aerosols anschließt. Ein Ventil 18 in der Verbindungsleitung 16 steuert den Zufluß in den Meßbehälter 11. Dieser weist in der Ausführung nach Fig. 1 im Abstand übereinander angeordnete Niveaukontakte 19 und obere und untere Grenzkontakte 20 sowie einen mit diesen zusammenwirkenden Schwimmer 21 auf. Über die Niveaukontakte 19 erfolgt mit Hilfe des Schwimmers 21 eine Kontrolle des Verbrauchs an flüssigem Aerosolbestandteil, und über die Grenzkontakte 20 eine Steuerung des Nachschubs an flüssigem Aerosolbestandteil über das Zulaufventil 18.

Im Betrieb der Vorrichtung bildet die Ringdüse 2 einen ringförmigen, gebündelten, aufwärtsgerichteten Luftstrom aus, der den aus der Zerstäuberdüse 8 austretenden nebelförmigen Aerosolbestandteil aufnimmt und sich mit diesem innig vermischt. Das überaus homogene Aerosol ist am Austritt praktisch vollständig tröpfchenfrei. Die Vorrichtung hat eine hohe Leistung und erzeugt ein Aerosol, das z.B. bei Bestehen aus Sterilluft und Peroxid eine hohe Sterilisations- bzw. Desinfektionskraft darbietet.

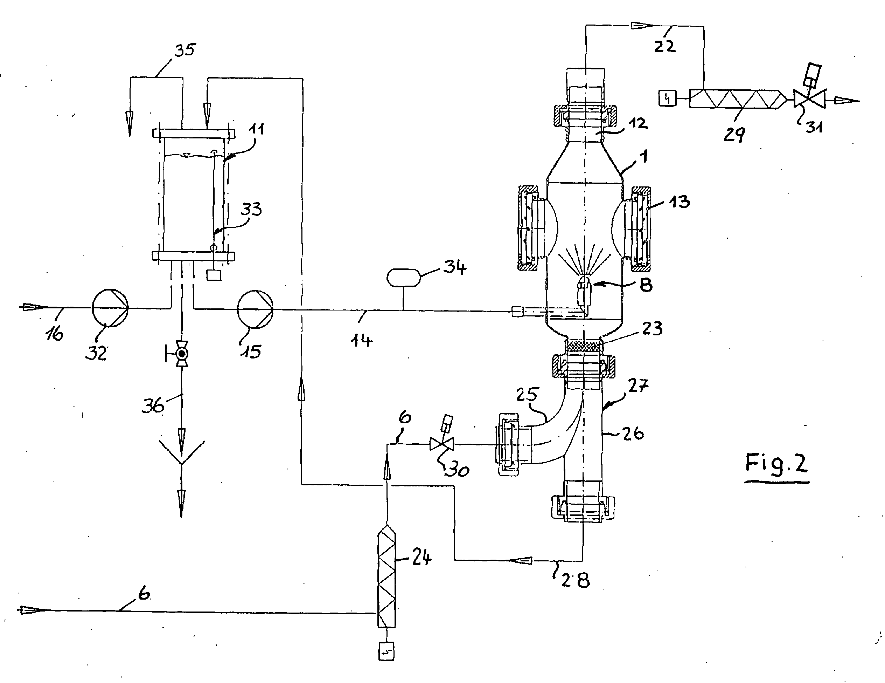

Bei der Ausführung nach Fig. 2 ist der Meßbehälter 11 separat aufgestellt. Das untere Ende des Zerstäuberbehälters 1 ist an die Zuleitung 6 für den gasförmigen Bestandteil angeschlossen und umfaßt als Mittel zur Gasstrombildung eine Anzahl übereinander angeordneter Siebe, die zu einem Siebpaket 23 zusammengefaßt sind. Die einzelnen Siebkörper bestehen vorzugsweise aus einem Maschengeflecht aus Edelmetalldraht. Bei Durchströmen des Siebpaketes 23 erfährt der Gasstrom eine zylindrische Bündelung und eine ebenfalls koaxiale Ausrichtung zur Zerstäuberdüse 8, die von dem überaus gleichmäßigen Gasstrom umströmt wird.

Die Zuleitung 6 für den gasförmigen Bestandteil nimmt ihren Ausgang von einem nicht näher veranschaulichten Vorratsbehälter, dessen gasförmiger Inhalt, z.B. Sterilluft, unter vorgegebenen Druck stehen kann. Auf ihrem Weg zum Zerstäuberbehälter 1 passiert der gasförmige Bestandteil in der Zuleitung 6 ein Heizaggregat 24. Die Zuleitung 6 mündet über ein Bogenstück 25 seitlich in einen geraden Leitungsteil 26 eines etwa T-förmigen Anschlußstückes 27 ein. Der Leitungsteil 26 ist dabei unterhalb des Siebpaketes koaxial an das untere Ende des Zerstäuberbehälters 1 angeschlossen und steht über eine Rücklaufleitung 28 mit dem oberen Ende des separaten Meßbehälters 11 für den flüssigen Bestandteil des Aerosols in Verbindung.

Auch in die an das obere Ende des Zerstäuberbehälters 1 angeschlossene Abförderleitung 22 für das Aerosol kann ein Heizaggregat 29 eingeschaltet sein um sicherzustellen, daß das Aerosol bei Erreichen seines Einsatzortes, beispielsweise eine Flaschensterilisationsstation, die erwünschte Temperatur aufweist.

In die Zuleitung 6 für den gasförmigen Bestandteil ist ein vorzugsweise mittels Stellantrieb betätigbares Absperrventil 30 vorgesehen, und ein solches Absperrventil 31 kann sich auch in der Abförderleitung 22 vor oder hinter dem Heizaggregat 29 befinden.

Der Meßbehälter 11 ist bodenseitig über die Leitung 16 an einen Vorratsbehälter für den flüssigen Bestandteil des Aerosols angeschlossen, der bei der Ausführung nach Fig. 2 mittels einer Pumpe 32 bedarfsweise in den Meßbehälter 11 gefördert wird. Der Meßbehälter 11 ist bei der Ausführung nach Fig. 2 mit einer kapazitiven Sonde 33 versehen, die bei Erreichen entsprechender Pegelstände das Wiederauffüllen des Meßbehälters 11 steuert und im übrigen Feststellungen über den Verbrauch an flüssigem Aerosolbestandteil ermöglicht. Einer Feinbestimmung des Verbrauches dient ein Durchlaufmengenmeßgerät 34, das in die Verbindungsleitung 14 eingeschaltet ist. Bei 35 ist eine Entlüftungsleitung angedeutet, und eine ventilgesteuerte Leitung 36 ermöglicht eine vollständige Entleerung des Meßbehälters 11.

Im Betrieb bildet sich im Zerstäuberbehälter 1 ein tröpfchenfreies feines, gleichmäßiges Aerosol, das über die Abförderleitung 22 seinem Einsatzzweck zugeführt werden kann und dort eine vollflächige Benetzung zu sterilisierender Flächen sichert. Mit Hilfe des Absperrventils 30 ist ein taktweiser Aerosolbildungsvorgang durchführbar. Ein solcher ist auch durchführbar, wenn das Absperrventil 30 geöffnet ist und das Absperrventil 31 taktweise geöffnet und geschlossen wird. Kondensat, das sich möglicherweise im unteren Bereich des Leitungsteils 26 angesammelt hat, wird im letzteren Taktbetrieb durch den Überdruck des gasförmigen Bestandteils im System über die Rücklaufleitung 28 in den oberen Bereich des Meßbehälters 11 überführt. Im Falle eines Taktbetriebs mit Hilfe des Absperrventils 30 findet der Meßbehälter 11 zweckmäßig eine Aufstellung in der Höhe unterhalb des Anschlußteils 27, so daß eine Rückführung von Kondensat durch die Leitung 28 ohne besondere Fördermaßnahmen durch Schwerkraft erfolgen kann.

Derartige Kondensatrückführungen sind allerdings nur in seltenen Fällen durchzuführen, da im Normalbetrieb Kondensat von flüssigen Aerosolbestandteilen aus dem Zerstäuberbehälter 1 in das Siebpaket 23 abläuft, wo es aufgefangen wird, sich verteilt und von der Strömung des gasförmigen Bestandteils auf- und mitgenommen wird, sobald eine entsprechende Strömung vorliegt.

Bei taktfreiem Dauerbetrieb sichert das Siebpaket 23, daß in der Regel das gesamte Kondensat im Bereich des Siebpaketes 23 aufgehalten und verteilt undvom Gasstrom aufgenommen wird, ohne daß Anteile in den Leitungsteil 26 übergehen, die dann in den Meßbehälter 11 zurückzuführen wären.

## Patentansprüche

1. Vorrichtung zum Erzeugen eines aus einem gasförmigen Bestandteil, insbesondere Luft wie Sterilluft, und einem flüssigen Bestandteil, insbesondere einem Sterilisationsmittel wie Peroxid, bestehenden Aerosols, mit einem Zerstäuberbehälter (1), in dem mittels einer zentralen Zerstäuberdüse (8) fortlaufend der flüssige Bestandteil zerstäubt und in einen den Zerstäuberbehälter (1) passierenden Gasstrom eingemischt wird, **dadurch gekennzeichnet, daß** die Zerstäuberdüse (8) für den flüssigen Bestandteil des Aerosols im unteren Bereich des sich vertikal erstreckenden Zerstäuberbehälters (1) angeordnet und stromaufwärts der Zerstäuberdüse (8) Mittel (2;23) zur Bildung eines aufwärtsgerichteten, gebündelten Gasstroms angeordnet sind, der die Zerstäuberdüse (8) koaxial umströmt.

2. Vorrichtung nach Anspruch 1, **dadurch gekennzeichnet, daß** als Mittel zur Gasstrombildung eine Ringdüse (2) für die Bildung eines ringförmigen Gasstroms vorgesehen ist, deren Mündung etwa in Höhe der Mündung der Zerstäuberdüse (8) gelegen ist.

3. Vorrichtung nach Anspruch 2, **dadurch gekennzeichnet, daß** die Ringdüse (2) einen zylindrischen Außenringteil (3) und einen in diesem angeordneten, kreiskegelabschnittsförmigen Innenringteil (4) umfaßt, der mit dem Außenringteil (3) einen sich aufwärts erweiternden, unterseitig geschlossenen Düsenkanal (5) begrenzt, in den eine Zuleitung (6) für den gasförmigen Bestandteil des Aerosols radial einmündet.

4. Vorrichtung nach einem der Ansprüche 1 bis 3, **dadurch gekennzeichnet, daß** die Zerstäuberdüse (8) als Schlitzdüse ausgebildet ist, deren einen kugeligen Düsenkörper (10) radial durchsetzender Düsenschlitz (9) in Höhe des oberen Randes des Innenringteils (4) der Ringdüse (2) gelegen ist.

5. Vorrichtung nach Anspruch einem der Ansprüche 1 bis 4, **dadurch gekennzeichnet, daß** der Zerstäuberbehälter (1) eine zylindrische Grundform aufweist.

6. Vorrichtung nach einem der Ansprüche 1 bis 5, **dadurch gekennzeichnet, daß** der Behälter (1) bodenseitig mit dem oberen Ende eines Meßbehälters (11) für den flüssigen Bestandteil des Aerosols in Verbindung steht.

7. Vorrichtung nach Anspruch 6, **dadurch gekennzeichnet, daß** der Zerstäuberbehälter (1) bodenseitig unmittelbar in das obere Ende des Meßbehälters (11) übergeht.

8. Vorrichtung nach Anspruch 1, **dadurch gekennzeichnet, daß** das untere Ende des Zerstäuberbehälters (1) an die Zuleitung (6) für den gasförmigen Bestandteil angeschlossen ist und übereinander angeordnete Siebe als Mittel zur Bildung des gebündelten Gasstroms umschließt.

9. Vorrichtung nach Anspruch 8, **dadurch gekennzeichnet, daß** die Siebe zu einem Siebpaket (23) zusammengefaßt sind.

10. Vorrichtung nach Anspruch 8 oder 9, **dadurch gekennzeichnet, daß** die Zuleitung (6) für den gasförmigen Bestandteil über ein Bogenstück (25) seitlich in einen geraden Leitungsteil (26) eines Anschlußstückes (27) einmündet, der unterhalb des Siebpakets (23) koaxial an das untere Ende des Zerstäuberbehälters (1) angeschlossen ist und über eine Rücklaufleitung (28) mit dem oberen Ende eines separat aufgestellten Meßbehälters (11) für den flüssigen Bestandteil des Aerosols in Verbindung steht.

11. Vorrichtung nach einem der Ansprüche 8 bis 10, **dadurch gekennzeichnet, daß** in die Zuleitung (6) für den gasförmigen Bestandteil ein Heizaggregat (24) eingeschaltet ist.

12. Vorrichtung nach einem der Ansprüche 8 bis 11. **dadurch gekennzeichnet, daß** in eine an das obere Ende des Zerstäuberbehälters (1) angeschlossene Abförderleitung (22) für das Aerosol ein Heizaggregat (29) eingeschaltet ist.

13. Vorrichtung nach einem der Ansprüche 8 bis 12, **dadurch gekennzeichnet, daß** in die Zuleitung (6) für den gasförmigen Bestandteil ein mittels Stellantrieb betätigbares Absperrventil vorgesehen ist.

14. Vorrichtung nach einem der Ansprüche 8 bis 13, **dadurch gekennzeichnet, daß** in die Abförderleitung ein mittels Stellantrieb betätigbares Absperrventil vorgesehen ist:

15. Vorrichtung nach einem der Ansprüche 1 bis 14, **dadurch gekennzeichnet, daß** aus dem unteren Ende des Meßbehälters (11) eine eine Pumpe (15) einschließende Verbindungsleitung (14) ausmündet, die in den Zerstäuberbehälter (1) hineingeführt ist und an ihrem Ende die Zerstäuberdüse (8) trägt.

16. Vorrichtung nach Anspruch 1 bis 15, **dadurch gekennzeichnet, daß** der Meßbehälter (11) im Bereich seines unteren Endes an einen Vorratsbehälter (17) für den flüssigen Bestandteil des Aerosols angeschlossen ist.

17. Vorrichtung nach einem der Ansprüche 1 bis 16, **dadurch gekennzeichnet, daß** der Meßbehälter (11) im Abstand übereinander angeordnete Niveaukontakte (19) für eine Verbrauchkontrolle und Grenzkontakte (20) für eine Nachschubsteuerung aufweist und im Meßbehälter (11) ein mit den Niveaukontakten (19) und den Grenzkontakten (20) zusammenwirkender Schwimmer (21) vorgesehen ist.

18. Vorrichtung nach Anspruch 17, **dadurch gekennzeichnet, daß** der Schwimmer (21) über die Grenzkontakte (20) die Betätigung eines Zulaufventils (18) in der Verbindungsleitung (16) zwischen dem Vorratsbehälter (17) und dem Meßbehälter (11) steuert.

19. Vorrichtung nach einem der Ansprüche 1 bis 18, **dadurch gekennzeichnet, daß** in die Verbindungsleitung (14) zwischen Meßbehälter (11) und Zerstäuberdüse (8) ein Durchlaufmengenmeßgerät (34) vorgesehen ist.

20. Vorrichtung nach einem der Ansprüche 1 bis 19, **dadurch gekennzeichnet, daß** in der Seitenwand des Zerstäuberbehälters (1) zumindest eine von einem Schauglas (13) verschlossene Inspektionsöffnung vorgesehen ist.

## Claims

1. A device for generating an aerosol comprising a gaseous constituent, especially air such as sterile air, and a liquid constituent, especially a sterilant such as peroxide, with an atomising container (1), in which the liquid constituent is continuously atomised by means of a central atomising nozzle (8) and is mixed into a gas stream passing through the atomising container (1), **characterised in that** the atomising nozzle (8) for the liquid constituent of the aerosol is arranged in the lower region of the vertically extending atomising container (1) and means (2; 23) for forming an upward-orientated directional gas stream are arranged upstream of the atomising nozzle (8), said gas stream flowing coaxially around the atomising nozzle (8).

2. The device according to claim 1, **characterised in that,** as means for forming a gas stream, a ring nozzle (2) for forming an annular gas stream is provided, the mouth of which ring nozzle is located roughly at the height of the mouth of the atomising nozzle (8).

3. The device according to claim 2, **characterised in that** the ring nozzle (2) comprises a cylindrical outer annular part (3) and an inner annular part (4) which is arranged in said outer annular part and has the shape of a circular cone section, said inner annular part defining with the outer annular part (3) a nozzle channel (5) widening upwards and closed at the lower side, into which a supply line (6) for the gaseous constituent of the aerosol emerges radially.

4. The device according to any one of claims 1 to 3, **characterised in that** the atomising nozzle (8) is designed as a slot-type nozzle, whose nozzle slot (9) radially penetrating a spherical nozzle body (10) is located at the height of the upper edge of the inner annular part (4) of the ring nozzle (2).

5. The device according to any one of claims 1 to 4, **characterised in that** the atomising container (1) has a cylindrical basic shape.

6. The device according to any one of claims 1 to 5, **characterised in that** the container (1) is connected at the bottom to the upper end of the measuring container (11) for the liquid constituent of the aerosol.

7. The device according to claim 6, **characterised in that** the atomising container (1) verges at the bottom directly into the upper end of the measuring container (11).

8. The device according to claim 1, **characterised in that** the lower end of the atomising container (1) is connected to the supply line (6) for the gaseous constituent and encloses screens arranged one upon the other as means for forming the directional gas stream.

9. The device according to claim 8, **characterised in that** the screens are combined into a screen stack (23).

10. The device according to claim 8 or 9, **characterised in that** the supply line (6) for the gaseous constituent emerges via an arc-shaped piece (25) laterally into a straight pipe part (26) of connection piece (27), which is connected beneath the screen stack (23) coaxially to the lower end of the atomising container (1) and is connected via a return line (28) to the upper end of a separately installed measuring container (11) for the liquid constituent of the aerosol.

11. The device according to any one of claims 8 to 10, **characterised in that** a heating unit (24) is incorporated into the supply line (6) for the gaseous constituent.

12. The device according to any one of claims 8 to 11, **characterised in that** a heating unit (29) is incorporated into a discharge line (22) for the aerosol which is connected to the upper end of the atomising container (1).

13. The device according to any one of claims 8 to 12, **characterised in that** a shut-off valve operable by means of an actuator is provided in the supply line (6) for the gaseous constituent.

14. The device according to any one of claims 8 to 13, **characterised in that** a shut-off valve operable by means of an actuator is provided in the discharge line.

15. The device according to any one of claims 1 to 14, **characterised in that** there emerges from the lower end of the measuring container (11) a connecting line (14) including a pump (15), which connecting line is led into the atomising container (1) and carries the atomising nozzle (8) at its end.

16. The device according to claim 1 to 15, **characterised in that** the measuring container (11) is connected in the region of its lower end to a storage container (17) for the liquid constituent of the aerosol.

17. The device according to any one of claims 1 to 16, **characterised in that** the measuring container (11) has level contacts (19) arranged spaced apart one above the other for a consumption control and limit contacts (20) for a supply control and a float (21) cooperating with the level contacts (19) and the limit contacts (20) is provided in the measuring container (11).

18. The device according to claim 17, **characterised in that** the float (21) controls, via the limit contacts (20), the actuation of a supply valve (18) in the connecting line (16) between the storage container (17) and the measuring container (11).

19. The device according to any one of claims 1 to 18, **characterised in that** a flow quantity measuring device (34) is provided in the connecting line (14) between measuring container (11) and atomising nozzle (8).

20. The device according to any one of claims 1 to 19, **characterised in that** at least one inspection opening closed by an inspection glass (13) is provided in the side wall of the atomising container (1).

## Revendications

1. Dispositif pour produire un aérosol constitué d'un composant gazeux, en particulier de l'air tel que de l'air stérile, et d'un composant liquide, en particulier un moyen de stérilisation tel que du peroxyde, comportant un récipient atomiseur (1), dans lequel le composant liquide est atomisé en continu au moyen d'une buse centrale d'atomisation (8) et mélangé à un flux de gaz passant par le récipient atomiseur (1), **caractérisé en ce que** la buse d'atomisation (8) pour le composant liquide de l'aérosol est disposée dans la zone inférieure du récipient atomiseur (1), lequel s'étend verticalement, et **en ce que** des moyens (2; 23) pour former un flux de gaz en faisceau dirigé vers le haut, lequel parcourt coaxialement la buse d'atomisation (8), sont disposés en amont de la buse d'atomisation (8).

2. Dispositif selon la revendication 1, **caractérisé en ce qu'**une buse annulaire (2) destinée à la formation d'un flux de gaz annulaire, dont l'embouchure est située à peu près à hauteur de l'embouchure de la buse d'aLomisaLion (8), est prévue en tant que moyen pour former ledit flux de gaz.

3. Dispositif selon la revendication 2, **caractérisé en ce que** la buse annulaire (2) comporte une partie annulaire extérieure (3) cylindrique et une partie annulaire intérieure (4) en forme de tronçon de cône de révolution disposée dans ladite partie annulaire extérieure (3), laquelle partie annulaire intérieure (4) délimite avec la partie annulaire extérieure (3) un canal de buse (5) fermé du côté inférieur, s'évasant vers le haut, dans lequel un conduit d'amenée (6) pour le composant gazeux de l'aérosol débouche radialement.

4. Dispositif selon l'une quelconque des revendications 1 à 3, **caractérisé en ce que** la buse d'atomisation (8) est conformée en tant que buse fendue, dont la fente de buse (9) traversant radialement un corps de buse (10) sphérique est située à hauteur du bord supérieur de la partie annulaire intérieure (4) de la buse annulaire (2).

5. Dispositif selon l'une quelconque des revendications 1 à 4, **caractérisé en ce que** le récipient atomiseur (1) présente une forme de base cylindrique.

6. Dispositif selon l'une quelconque des revendications 1 à 5, **caractérisé en ce que** le récipient (1) communique du côté du fond avec l'extrémité supérieure d'un récipient de mesure (11) destiné au composant liquide de l'aérosol.

7. Dispositif selon la revendication 6, **caractérisé en ce que** le récipient atomiseur (1) s'insère du côté du fond directement dans l'extrémité supérieure du récipient de mesure (11).

8. Dispositif selon la revendication 1, **caractérisé en ce que** l'extrémité inférieure du récipient atomiseur (1) est raccordée au conduit d'amenée (6) pour le composant gazeux et entoure des tamis disposés les uns au-dessus des autres en tant que moyen pour former le flux de gaz en faisceau.

9. Dispositif selon la revendication 8, **caractérisé en ce que** les tamis sont réunis en un paquet de tamis (23).

10. Dispositif selon la revendication 8 ou 9, **caractérisé en ce que** le conduit d'amenée (6) pour le composant gazeux débouche, par l'intermédiaire d'une pièce coudée (25), latéralement dans une partie droite de conduit (26) d'une pièce de raccordement (27), laquelle est raccordée au-dessous du paquet de tamis (23) coaxialement à l'extrémité inférieure du récipient atomiseur (1) et communique par l'intermédiaire d'un conduit de retour (28) avec l'extrémité supérieure d'un récipient de mesure (11) pour le composant liquide de l'aérosol, lequel récipient (11) est installé séparément.

11. Dispositif selon l'une des revendications 8 à 10, **caractérisé en ce qu'**une unité de chauffage (24) est insérée dans le conduit d'amenée (6) pour le composant gazeux.

12. Dispositif selon l'une des revendications 8 à 11, **caractérisé en ce qu'**une unité de chauffage (29) est insérée dans un conduit de transport (22) pour l'aérosol raccordé à l'extrémité supérieure du récipient atomiseur (1).

13. Dispositif selon l'une des revendications 8 à 12, **caractérisé en ce qu'**une soupape d'arrêt capable d'être actionnée au moyen d'un servomoteur est prévue dans le conduit d'amenée (6) pour le composant gazeux.

14. Dispositif selon l'une des revendications 8 à 13, **caractérisé en ce qu'**une soupape d'arrêt capable d'être actionnée au moyen d'un servomoteur est prévue dans le conduit de transport (22).

15. Dispositif selon l'une des revendications 1 à 14, **caractérisé en ce qu'**un conduit de jonction (14) renfermant une pompe (15) débouche de l'extrémité inférieure du récipient de mesure (11), lequel conduit est introduit dans le récipient atomiseur (1) et porte à son extrémité la buse d'atomisation (8).

16. Dispositif selon les revendications 1 à 15, **caractérisé en ce que** le récipient de mesure (11) est raccordé dans la zone de son extrémité inférieure à un récipient d'approvisionnement (17) pour le composant liquide de l'aérosol.

17. Dispositif selon l'une quelconque des revendications 1 à 16, **caractérisé en ce que** le récipient de mesure (11) présente des contacts de niveau (19) disposés à distance les uns au-dessus des autres, destinés à un contrôle de la consommation, et des contacts de limite (20) destinés à une commande d'approvisionnement et **en ce qu'**un flotteur (21) coopérant avec les contacts de niveau (19) et les contacts de limite (20) est prévu à l'intérieur du récipient de mesure (11).

18. Dispositif selon la revendication 17, **caractérisé en ce que** le flotteur (21) commande par l'intermédiaire des contacts de limite (20) l'actionnement d'une soupape d'amenée (18) dans le conduit de jonction (16) entre le récipient d'approvisionnement (17) et le récipient de mesure (11).

19. Dispositif selon l'une quelconque des revendications 1 à 18, **caractérisé en ce qu'**un appareil de mesure de la quantité de passage (34) est prévu dans le conduit de jonction (14) entre le récipient de mesure (11) et la buse d'atomisation (8).

20. Dispositif selon l'une quelconque des revendications 1 à 19, **caractérisé en ce qu'**au moins une ouverture d'inspection obturée par un hublot (13) est prévue dans la paroi latérale du récipient atomiseur (1).
